# FASCICULE DE BREVET EUROPEEN

(11) **EP 3 568 355 B1**
(45) Date de publication et mention de la délivrance du brevet: **08.02.2023**
(21) Numéro de dépôt: 17829232.2
(22) Date de dépôt: 18.12.2017
(51) Int. Cl.: B64G 1/40, B05D 3/14, B64G 1/00

(54) **PROCÉDÉ DE PRÉPARATION DE LA SURFACE D'UN RÉSERVOIR CRYOGÉNIQUE DE LANCEUR SPATIAL**
VERFAHREN ZUR VORBEREITUNG DER OBERFLÄCHE EINES KRYOGENEN TANKS EINES RAUMSTARTFAHRZEUGS
METHOD FOR PREPARING THE SURFACE OF A CRYOGENIC TANK OF A SPACE LAUNCH VEHICLE

(30) Priorité: 12.01.2017 FR 1750262
(43) Date de publication de la demande: 20.11.2019
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ROUX, Pascal, 38360 Noyarey (FR); SAUVIGNET, Pierre Yves, 38500 Voiron (FR)
(74) Mandataire: Air Liquide
(86) Numéro de dépôt international: PCT/FR2017/053628
(87) Numéro de publication internationale: WO 2018/130754

(56) Documents cités:
- EP-A1- 1 876 382
- WO-A1-96/38311
- FR-A1- 2 932 243
- GB-A- 1 384 730
- JP-A- H11 245 042

## Description

L'invention concerne un procédé de préparation de la surface d'un réservoir cryogénique de lanceur spatial.

L'invention concerne plus particulièrement un procédé de préparation d'une surface d'un réservoir cryogénique de lanceur spatial, le réservoir étant constitué d'au moins une paroi en alliage d'aluminium, dans lequel au moins une partie de la surface de la paroi est soumise à un décapage.

Les réservoirs d'oxygène de lanceurs spatiaux subissent un traitement de la surface externe par décapage chimique avant le dépôt d'un primaire d'accroche et de protection. Ce primaire d'accroche et de protection est prévu pour assurer une bonne adhérence en vue du collage, sur les réservoirs cryogéniques, d'éléments tels que : des panneaux d'isolation cryogéniques (notamment à cellules fermées dans des épaisseurs variant de 10 à 30 mm par exemple), des supports métalliques notamment de câblages, des supports d'isolation (notamment de type « MLI » c'est-à-dire isolation multicouche « Multi Layers Insulation »).

Cette solution éprouvée présente cependant des inconvénients et notamment :
- un coût élevé,
- la génération d'effluents polluants,
- la nécessité de prévoir une surface importante en atelier.

La surface traitée est ensuite enduite d'un primaire d'accroche (par exemple tel que celui décrit dans le document FR2903114A1 éventuellement pulvérisé au pistolet).

WO 96/38311 A1 divulgue un exemple de procédé de traitement de surface utilisant un plasma. 11

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est défini à la revendication 1.

Par ailleurs, des modes de réalisation de l'invention peuvent comporter l'une ou plusieurs des caractéristiques suivantes :
- le faisceau gazeux plasma de gaz ionisé généré par la buse frappe une portion de la surface ayant un diamètre compris entre 5 et 20mm, la surface et la buse sont déplacés relativement pour traiter la surface,
- la surface et la buse sont déplacés relativement pour traiter la surface à une vitesse de balayage comprise entre et 100 et 500 mm par seconde et de préférence 300mm par seconde,
- le faisceau gazeux comprend de l'air, de l'azote, de l'argon,
- le réservoir comprend deux parois jointives définissant une rainure, le décapage étant réalisé dans la rainure,
- le procédé comprend, après le décapage de la surface, une étape de dépôt, sur la surface décapée, d'une couche de matériau primaire d'accroche à base de liant en solution dans un solvant et un cosolvant,
- le procédé comprend, après l'étape de dépôt de la couche de matériau primaire d'accroche, une étape de collage, sur la couche de matériau primaire d'accroche, d'une couche d'isolation thermique du réservoir et/ou d'un support pour un câblage et/ou d'un support pour une isolation,
- le procédé comprend, après l'étape de dépôt de la couche de matériau primaire d'accroche, une étape de collage, sur la couche de matériau primaire d'accroche, d'une couche d'isolation thermique du réservoir comprenant au moins l'un parmi : une mousse d'isolation plastique, une couche de polymère, une couche de polyuréthane, une couche de PVC, une mousse de polyimide, une couche de mousse à cellules fermées, une structure de support d'une isolation multicouche « MLI ».

D'autres particularités et avantages apparaîtront à la lecture de la description ci-après, faite en référence aux figures dans lesquelles :
- la figure 1 représente une vue en perspective, schématique et partielle illustrant un exemple la structure d'un réservoir,
- la figure 2 représente une vue en perspective, schématique et partielle illustrant un détail de la structure d'un réservoir de la figure 1,
- la figure 3 représente une vue en coupe, schématique et partielle illustrant un exemple la structure de l'épaisseur d'un tel réservoir isolé,
- la figure 4 représente une vue en coupe, schématique et partielle illustrant un détail d'un exemple la structure d'un tel réservoir,
- la figure 5 représente une vue en coupe, schématique et partielle illustrant un exemple la structure et du fonctionnement d'un outil de décapage plasma du procédé selon l'invention.

L'invention concerne en particulier les réservoirs en aluminium ou alliage d'aluminium (tel que la nuance 7020) pour stocker de l'oxygène liquide dans les lanceurs spatiaux. L'invention concerne notamment des réservoirs en aluminium de type série 2000, 5000 ou 7000. L'épaisseur du réservoir peut être comprise par exemple entre 1 et 5mm. Ces réservoirs peuvent être prévus pour fonctionner à une température comprise entre 20 et 300k par exemple. La pression au sein de ces réservoirs peut être comprise par exemple entre 0 et 3 bar.

L'invention peut concerner tout autre type de réservoir cryogénique, par exemple pour stocker de l'hydrogène liquide.

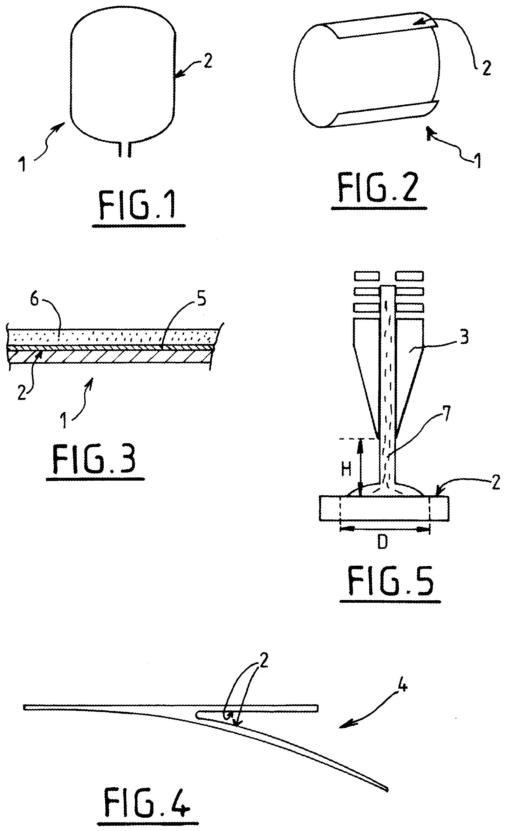

Un tel réservoir 1 est généralement formé d'une virole (tube cf. figure 2) aux extrémités de laquelle sont soudées un fond et une extrémité supérieure.

La surface 2 de préférence externe du réservoir 1 est soumise à un décapage en vue d'y fixer une isolation ou un équipement (déflecteur ou autre par exemple).

Selon une particularité avantageuse, le décapage comprend ou est constitué d'un décapage par la technologie plasma, c'est-à-dire via un bombardement de la surface avec un faisceau gazeux plasma de gaz ionisé.

Un plasma est ionisé. Cet état du gaz peut être obtenu lorsqu'on soumet ce dernier à un champ électrique plus ou moins intense à des fréquences allant jusqu'aux micro-ondes.

Le gaz utilisé peut être de l'air, de l'azote, leur mélange ou tout autre gaz ou mélange approprié. Par exemple ce gaz pourrait être chargé de particules, poudre, silice ou autre pour améliorer le décapage.

Le plasma utilisé est un plasma de type « à pression atmosphérique ».

De préférence le décapage Plasma utilise le procédé ULS de la société Acxys.

Le bombardement de la surface 2 avec un faisceau gazeux plasma de gaz ionisé utilise une buse 3 pour délivrer faisceau 7 de gaz qui est espacée de la surface décapée d'une distance H comprise entre 5 et 40mm et de préférence de 20mm.

Le faisceau gazeux plasma généré la buse 3 frappe une portion de la surface ayant un diamètre D compris entre 5 et 20mm. De préférence la surface 2 et la buse 3 sont déplacées relativement pour traiter la surface selon une vitesse de balayage déterminée, par exemple comprise entre 100 et 500mm par seconde et de préférence 300mm par seconde.

Le faisceau gazeux a une température comprise de préférence entre 150 et 250°C et notamment 200°C.

Le faisceau plasma a une puissance comprise entre 700 et 1100 watt et notamment entre 930 et 940 watt.

Ces paramètres de fonctionnement permettre d'assurer un décapage ou traitement compatible avec les exigences des réservoirs spatiaux.

De plus, dans le cas où le réservoir 1 comprend deux parois 2 jointives définissant une rainure 4 difficile d'accès, le décapage plasma permet un traitement efficace dans la rainure 4. Le décapage plasma est donc efficace dans les zones non accessibles par décapage à incidence normée.

Après un tel le décapage de la surface 2, d'une couche 5 de matériau primaire d'accroche comprenant par exemple un liant en solution dans un solvant et un cosolvant. Ce primaire peut notamment comprendre un mélange d'une base de résine et d'un durcisseur liés par un liant tel que du toluène. Par exemple un tel primaire d'accroche peut être du type de celui décrit dans le document FR2903114A1.

De plus, après l'étape de dépôt de la couche 5 de matériau primaire d'accroche, une couche 6 d'isolation thermique du réservoir peut être collée sur la couche 5 de matériau primaire d'accroche 1.

Les essais réalisés par les inventeurs sont permis de mettre en évidence que ce procédé de préparation permet d'obtenir des résultats compatibles avec les exigences de tels réservoirs. En particuliers, des échantillons testés ont été soumis à des tests de tenue de type brouillard salin et griffe mécanique.

L'angle de contact à l'eau a été mesuré pour des échantillons. Ceci a démontré la bonne stabilité (72h) du décapage (mesurant notamment la durée maximale possible entre le décapage et le dépôt d'une couche de matériau primaire sans perdre les effets du décapage).

De plus, la comparaison entre des surface décapées et non décapées sur les échantillons n'a pas révélé de variation de dureté du fait du décapage.

En ce qui concerne la résistance à la rupture, cette dernière semble être améliorée par le traitement plasma.

Le décapage plasma n'a pas généré de modification microstructurale ou de différence de taille de grain, ni de différence de précipité intermétalliques dans les échantillons traités.

Le traitement plasma n'a pas eu d'impact non plus de type microfissure sur des cordons de soudure sur les échantillons testés.

L'adhérence au collage a été testée sur les échantillons :
- vérification adhérence collage (colle ECCOBOND^{®}) à température ambiante et à 77K et variation des durées avant dépôt d'une couche de primaire pour vérifier la robustesse,
- essais de traction comparatifs à température ambiante.

Des éprouvettes collées (colles ECCOBOND^{®} ou AY103-1 ^{®}) ont subi un essai de cisaillement (la moyenne des efforts de cisaillement de chaque série est comprise entre 11 et 17 MPa pour un critère d'effort de cisaillement ≥ 3 MPa ou ≥ 10 MPa).

D'autres éprouvettes ont subi un essai de traction avec masselotte à 77 K (charge décollement picot ≥ 21 kN).

Les résultats de l'ensemble des essais de collage réalisés ont tous démontré des résultats supérieurs aux critères acceptables.

Des tests de vieillissement et d'essai d'arrachage (à la griffe) ont révélé une tenue également acceptable.

## Revendications

1. Procédé de préparation d'une surface (2) d'un réservoir (1) cryogénique de lanceur spatial, le réservoir (1) étant constitué d'au moins une paroi (2) en alliage d'aluminium, la paroi (2) étant constituée de l'un au moins des matériaux suivants : un alliage de série 2000 ou 5000 ou 7000 notamment un alliage d'aluminium 7020, dans lequel au moins une partie de la surface de la paroi (2) est soumise à un décapage, **caractérisé en ce que** le décapage comprend un décapage par la technologie plasma, c'est-à-dire via un bombardement de la surface avec un faisceau gazeux plasma de gaz ionisé, la technologie plasma utilisée étant un plasma à pression atmosphérique, et **en ce que** le bombardement de la surface avec un faisceau gazeux plasma de gaz ionisé utilise une buse (3) pour délivrer le faisceau
de gaz qui est espacée de la surface en cours de décapage d'une distance **(H)** comprise entre 5 et 40mm, le faisceau gazeux ayant une température comprise entre 150 et 250°C et notamment 200°C, et **en ce que** le faisceau plasma a une puissance comprise entre 700 et 1100 watts.

2. Procédé selon la revendication 1, **caractérisé en ce que** le faisceau gazeux plasma de gaz ionisé généré par la buse (3) frappe une portion de la surface ayant un diamètre (D) compris entre 5 et 20mm et **en ce que** la surface (2) et la buse sont déplacés relativement pour traiter la surface.

3. Procédé selon la revendication 2, **caractérisé en ce que** la surface (2) et la buse sont déplacés relativement pour traiter la surface à une vitesse de balayage comprise entre et 100 et 500 mm par seconde et de préférence 300mm par seconde.

4. Procédé selon l'une quelconque des revendications 1 à 3, **caractérisé en ce que** le faisceau gazeux comprend de l'air, de l'azote, de l'argon.

5. Procédé selon l'une quelconque des revendications 1 à 4, **caractérisé en ce que** le réservoir comprend deux parois (2) jointives définissant une rainure (4) et **en ce que** le décapage est réalisé dans la rainure (4).

6. Procédé selon l'une quelconque des revendications 1 à 5, **caractérisé en ce qu'**il comprend, après le décapage de la surface (2), une étape de dépôt, sur la surface décapée, d'une couche (5) de matériau primaire d'accroche à base de liant en solution dans un solvant et un cosolvant.

7. Procédé selon la revendication 6, **caractérisé en ce qu'**il comprend, après l'étape de dépôt de la couche (5) de matériau primaire d'accroche, une étape de collage, sur la couche (5) de matériau primaire d'accroche, d'une couche (6) d'isolation thermique du réservoir (1) et/ou d'un support pour un câblage et/ou d'un support pour une isolation.

8. Procédé selon la revendication 6, **caractérisé en ce qu'**il comprend, après l'étape de dépôt de la couche (5) de matériau primaire d'accroche, une étape de collage, sur la couche (5) de matériau primaire d'accroche, d'une couche (6) d'isolation thermique du réservoir (1) comprenant au moins l'un parmi : une mousse d'isolation plastique, une couche de polymère, une couche de polyuréthane, une couche de PVC, une mousse de polyimide, une couche de mousse à cellules fermées, une structure de support d'une isolation multicouche « MLI ».

## Patentansprüche

1. Verfahren zur Vorbereitung einer Fläche (2) eines Trägerraketen-Kryobehälters (1), wobei der Behälter (1) aus mindestens einer Wand (2) aus Aluminiumlegierung besteht, die Wand (2) aus mindestens einem der folgenden Materialien besteht: einer Legierung der 2000er- oder 5000er- oder 7000er-Reihe, insbesondere einer 7020er-Aluminiumlegierung, wobei zumindest ein Teil der Fläche der Wand (2) einem Ätzen unterzogen wird, **dadurch gekennzeichnet, dass** das Ätzen ein Ätzen mittels der Plasmatechnologie umfasst, d. h. einen Beschuss der Fläche mit einem Plasmagasstrahl aus ionisiertem Gas, wobei es sich bei der verwendeten Plasmatechnologie um ein Atmosphärendruckplasma handelt, und dadurch, dass beim Beschuss der Fläche mit einem Plasmagasstrahl aus ionisiertem Gas zur Abgabe des Gasstrahls eine Düse (3) verwendet wird, die während des Ätzens um einen Abstand (H) zwischen 5 und 40 mm von der Fläche beabstandet ist, wobei der Gasstrahl eine Temperatur zwischen 150 und 250 °C und insbesondere von 200 °C aufweist, und dadurch, dass der Plasmastrahl eine Leistung zwischen 700 und 1100 Watt aufweist.

2. Verfahren nach Anspruch 1, **dadurch gekennzeichnet, dass** der durch die Düse (3) erzeugte ionisierte Plasmagasstrahl aus ionisiertem Gas auf einen Teil der Fläche mit einem Durchmesser (D) zwischen 5 und 20 mm auftrifft, und dadurch, dass die Fläche (2) und die Düse zur Behandlung der Fläche relativ bewegt werden.

3. Verfahren nach Anspruch 2, **dadurch gekennzeichnet, dass** die Fläche (2) und die Düse relativ bewegt werden, um die Fläche bei einer Vorschubgeschwindigkeit zwischen 100 und 500 mm pro Sekunde und vorzugsweise 300 mm pro Sekunde zu behandeln.

4. Verfahren nach einem der Ansprüche 1 bis 3, **dadurch gekennzeichnet, dass** der Gasstrahl Luft, Stickstoff, Argon umfasst.

5. Verfahren nach einem der Ansprüche 1 bis 4, **dadurch gekennzeichnet, dass** der Behälter zwei aneinanderstoßende Wände (2) umfasst, die eine Aussparung (4) definieren, und dadurch, dass das Ätzen in der Aussparung (4) erfolgt.

6. Verfahren nach einem der Ansprüche 1 bis 5, **dadurch gekennzeichnet, dass** es nach dem Ätzen der Fläche (2) einen Schritt des Abscheidens einer Schicht (5) eines in einem Lösungsmittel und einem Hilfslösungsmittel gelösten Haftgrundmaterials auf Bindemittelbasis auf der geätzten Fläche umfasst.

7. Verfahren nach Anspruch 6, **dadurch gekennzeichnet, dass** es nach dem Schritt des Abscheidens der Haftgrundmaterialschicht (5) einen Schritt des Klebens einer Wärmedämmschicht (6) des Behälters (1) und/oder einer Halterung für eine Verkabelung und/oder einer Halterung für eine Isolierung auf die Haftgrundmaterialschicht (5) umfasst.

8. Verfahren nach Anspruch 6, **dadurch gekennzeichnet, dass** es nach dem Schritt des Abscheidens der Haftgrundmaterialschicht (5) den Schritt des Klebens einer Wärmedämmschicht (6) des Behälters (1), die entweder: einen Kunststoffisolierschaumstoff, eine Polymerschicht, eine Polyurethanschicht, eine PVC-Schicht, einen Polyimidschaumstoff, eine Schicht aus geschlossenzelligem Schaumstoff und/oder eine Stützkonstruktion einer mehrlagigen Isolierung, "MLI", umfasst, auf die Haftgrundmaterialschicht (5) umfasst.

## Claims

1. Process for the preparation of a surface (2) of a space launcher cryogenic tank (1), the tank (1) consisting of at least one wall (2) made of aluminium alloy, the wall (2) consisting of one at least of the following materials: an alloy from series 2000 or 5000 or 7000, in particular an aluminium 7020 alloy, in which at least a part of the surface of the wall (2) is subjected to stripping, **characterized in that** the stripping comprises stripping by plasma technology, that is to say via a bombardment of the surface with a plasma gas beam of ionized gas, the plasma technology used being an atmospheric pressure plasma, and **in that** the bombardment of the surface with a plasma gas beam of ionized gas uses a nozzle (3) to deliver the gas beam which is separated from the surface during stripping by a distance (H) of between 5 and 40 mm, the gas beam having a temperature of between 150 and 250°C and in particular 200°C, and **in that** the plasma beam has a power of between 700 and 1100 watts.

2. Process according to Claim 1, **characterized in that** the plasma gas beam of ionized gas generated by the nozzle (3) strikes a portion of the surface having a diameter (D) of between 5 and 20 mm and **in that** the surface (2) and the nozzle are moved relative to one another in order to treat the surface.

3. Process according to Claim 2, **characterized in that** the surface (2) and the nozzle are moved relative to one another in order to treat the surface at a sweeping rate of between 100 and 500 mm per second and preferably 300 mm per second.

4. Process according to any one of Claims 1 to 3, **characterized in that** the gas beam comprises air, nitrogen, argon.

5. Process according to any one of Claims 1 to 4, **characterized in that** the tank comprises two joined walls (2) defining a groove (4) and **in that** the stripping is carried out in the groove (4).

6. Process according to any one of Claims 1 to 5, **characterized in that** it comprises, after the stripping of the surface (2), a stage of deposition, on the stripped surface, of a layer (5) of binder-based bonding primer material in solution in a solvent and a cosolvent.

7. Process according to Claim 6, **characterized in that** it comprises, after the stage of deposition of the layer (5) of bonding primer material, a stage of adhesive bonding, to the layer (5) of bonding primer material, of a layer (6) for thermal insulation of the tank (1) and/or of a support for wiring and/or of a support for insulation.

8. Process according to Claim 6, **characterized in that** it comprises, after the stage of deposition of the layer (5) of bonding primer material, the stage of adhesive bonding, to the layer (5) of bonding primer material, of a layer (6) for thermal insulation of the tank (1) comprising at least one from: a plastic insulation foam, a polymer layer, a polyurethane layer, a PVC layer, a polyimide foam, a closed cell foam layer, a structure for support of a multilayer insulation "MLI".
